# EUROPEAN PATENT APPLICATION

(11) **EP 4 730 209 A1**
(43) Date of publication of application: **22.04.2026**
(21) Application number: 24207671.9
(22) Date of filing: 20.10.2024
(51) Int. Cl.: G06N 5/01, G06N 10/40, G06N 10/60

(54) **AN OPTIMAL STOCHASTIC CONTROLLER FOR AN OPEN QUANTUM SYSTEM**

(71) Applicant: Stichting Radboud Universiteit, 6525 XZ Nijmegen (NL)
(72) Inventor: KAPPEN, Hilbert Johan, 6526 XZ Nijmegen (NL)
(74) Representative: Patent Business B.V.

(57) **Abstract**

The invention is in the field of a method of quantum computing, that is, information processing based on quantum-mechanical phenomena, in particular a stochastic controller for an open quantum system, a method of stochastic optimal control of an open quantum system, and a computer program for stochastic optimal control of an open quantum system.

## Description

### FIELD OF THE INVENTION

The invention is in the field of a method of quantum computing, that is, information processing based on quantum-mechanical phenomena, in particular a stochastic controller for an open quantum system, a method of stochastic optimal control of an open quantum system, and a computer program for stochastic optimal control of an open quantum system.

### BACKGROUND OF THE INVENTION

Quantum computation may be defined as a computation using laws of quantum physics, in particular the Schrödinger equation. Concretely, quantum computation performs a sequence of operations on an experimentally prepared initial quantum state to compute a desirable final or ground state. The problem is known in the literature as quantum state preparation. The key problem in quantum computing is to find the sequence of operations that realizes a given final state from a given initial state. This problem can be formalized as an optimal control problem: Given an initial quantum state and a cost that quantifies the quality of the final state as well as the cost of the computation, find the sequence of control operations that minimizes this cost. However, these methods are often difficult to implement and do not scale well to large problem instances.

In quantum computing, a quantum algorithm is considered to relate to an algorithm that runs on a realistic model of quantum computation. An often-used model is a quantum circuit model of computation. In comparison, a classical algorithm is a sequence of instructions, or a step-by-step procedure, for solving a problem. Therein, each step or instruction can be performed on a classical computer. Similarly, a quantum algorithm may also be considered a step-by-step procedure, where each of the steps can be performed on a quantum computer. The quantum algorithm is considered to be mostly or fully inherently of a quantum nature.

In quantum computing so-called cold atoms may be used. In the last several years, Rydberg-atom quantum processors have emerged to become one of the most promising platforms for quantum computing. These quantum processors typically rely on neutral atoms as qubits that can be and are well isolated from the environment and prepared in large systems of hundreds or thousands of qubits with different geometries, e.g. using laser cooling and trapping techniques. Quantum information is encoded in the internal states of atoms with interactions mediated via their highly electronically excited Rydberg states. In combination with coherent laser excitation, Rydberg atoms can realize strong and widely tunable interactions that can extend over several µm. Moreover, they offer significant advantages over other technologies, including the possibility for long coherence times (» 1 second, for ground state encoding), fast and switchable interactions, allowing for the generation of highly entangled states, and high-fidelity entangling operations. Accordingly, ultracold Rydberg quantum systems have proven very successful for studying many-body physics and analog quantum simulation, and are now ready to advance to the forefront among other platforms for scalable quantum computing.

Quantum algorithms are usually described, in the commonly used circuit model of a quantum system of quantum computation, by a quantum circuit, that acts on some input qubits, characterizing an initial quantum state of the quantum system, and terminates with a measurement on the final quantum state. A quantum circuit may consist of simple quantum gates, each of which acts on some finite number of qubits. Quantum algorithms can be categorized by the main techniques involved in the algorithm. Some commonly used techniques/ideas in quantum algorithms include phase kick-back, phase estimation, the quantum Fourier transform, quantum walks, variational quantum eigensolver (VQE), amplitude amplification and topological quantum field theory.

Most quantum computing paradigms nowadays are based on digital quantum circuits, which typically contain a fixed set of predefined quantum gates that are tailored to the physical device that may be available as such. An ansatz is made for the shape of the quantum circuit, e.g. in terms of the pattern of gates. Furthermore, a computation time required is fully determined by the gate sequence and cannot be easily decreased to minimize unwanted effects of decoherence; Methods, such as the variational quantum eigensolver (VQE), have been designed to find the ground state of quantum Hamiltonians, which has direct application for a large class of combina-toric optimization problems and problems in quantum chemistry.

A variational quantum eigensolver (VQE) is a quantum algorithm that may be used for specific purposes, such as for quantum chemistry, for quantum simulations, and optimization problems. It is a hybrid algorithm as it uses both classical computers, and quantum computers, in order to resolve the ground state of a quantum system representing e.g. a given physical system. Therein a quantum processor or quantum algorithm calculates an expectation value of the system with respect to an observable, often the target Hamiltonian, given a guess or ansatz of the parameters of the variational quantum circuit, and a classical optimizer is used to improve the parameters. The objective of the quantum algorithm, and in particular of the VQE, is to find a set of quantum operations that prepares the lowest energy state (or minima) of a target Hamiltonian, or a close approximation thereof. While the only strict requirement for the representation of an observable is that it is efficient to estimate its expectation values, it is often simplest if that operator has a compact or simple expression e.g. in terms of Pauli operators or tensor products of Pauli operators.

In contrast to these gate-based methods, e.g. (laser) pulse-based methods aim to directly optimize the pulses interacting with individual qubits, giving rise to analog quantum circuits. Optimal control is a natural way to optimize the pulse sequence. This method has been used to optimize laser pulses for quantum gate implementations, but has only recently been proposed for the full optimization of analog quantum circuits in VQEs. Pulse-based methods offer several advantages over gate-based methods: they allow for faster state preparation, simpler implementation and yield more expressive circuits. Recently such quantum-programs-at-the-pulse-level are provided by several companies and academic research groups, which relates to a programming environment that provides pulse-level access to quantum circuits. These programs provide direct access to the elementary components of the device, thus enabling programming of applications for analog quantum circuits.

To some extent the present invention also relates to a Quadratic unconstrained binary optimization (QUBO), also known as unconstrained binary quadratic programming (UBQP). This is considered to relate to a combinatorial optimization problem. It may have a wide range of applications, from finance and economics to machine learning. Moreover, due to its close connection to Ising models, QUBO constitutes a central problem class for adiabatic quantum computation, where it is solved through a physical process called quantum annealing.

To some extent the present invention also relates to Quantum annealing (QA), which is an optimization process for finding a global minimum of discrete optimization problems, e.g. the ground state, of a given objective function by gradually changing the quantum Hamiltonian from an initial Hamiltonian whose ground state can be easily prepared to a final Hamiltonian that is equal to the target Hamiltonian and whose ground state solution is the solution of the optimization problem, using the effect of quantum tunneling. The present invention therefore relates to an improved method for quantum computing which e.g. scales better with large problems to be solved, and further aspects thereof, which overcome one or more of the above disadvantages, without jeopardizing functionality and advantages.

### SUMMARY OF THE INVENTION

In this patent a path integral control method is applied to control an open quantum system (quantum path integral control, QPIC) using a pulse-based optimal control framework. The control problem is to optimize the sequence of pulses such that the quantum circuit transforms a given initial state into a desired final state (as fast as possible). An open quantum system is considered to relate to a quantum-mechanical system that interacts with an external quantum system, which is known as the environment or a bath. In general, these interactions significantly change the dynamics of the system and result in quantum dissipation, such that the information contained in the system may be lost to its environment. The optimal control can be an open loop controller where the control does not depend on the state of the quantum system, and/or it may be a state dependent feedback controller. For open loop control, typically only the measurement of the cost of the final state is required. Feedback control typically requires in addition measurement of the quantum state for all times throughout the computation. QPIC control has the following advantages over the state of the art: The optimal control is computed directly from simulations of the stochastic dynamics. There is no need to solve a Bellman equation or PMP equations, as is currently done. As a result, the computational complexity is exponentially reduced from O(2²ⁿ) to O(2ⁿ) with n the number of qubits. The optimal control may be computed off-line, using a simulator of the quantum circuit, or may be computed on-line using the quantum device directly. This latter possibility is considered unique for the proposed method that is not possible using any of the existing control methods. It typically has two important advantages over existing methods: 1) the control is adjusted to the particular device without the need to model noise and decoherence separately. 2) Using a quantum simulator requires explicit storage of the quantum state which is of size O(2^n) and therefore restricted to relatively small n. By using the quantum device instead, the control can be computed in principle for arbitrary large number of qubits. For classical problems, such as arises in robotics, the PI control method is very efficient and provides robust solutions for high dimensional non-linear stochastic problems where other methods fail. However, the application of the path integral control method to quantum computing is non-trivial for the following reason: PI control works in a stochastic setting only, while quantum computation is deterministic following a unitary evolution. To solve this issue inventors proceed as follows. First, one considers an open quantum system that explicitly models the interaction of the quantum device and the quantum computation with the environment. The dynamics of this open quantum system is given by the so-called Lindblad equation, which is a deterministic equation that models the evolution of the quantum density operator. Subsequently, one defines a so-called stochastic unraveling that is constructed such that its average behavior coincides with the Lindblad equation. In general, the stochastic dynamics that is defined by such an unraveling is not suitable to define a PI control problem, because PI control only works for a particular class of dynamical systems. However, the unraveling of a given open quantum system is not unique and for certain classes of open quantum control problems one can use this freedom to transform the unraveling to a PI control form. This then allows to define a QPIC method for open loop control. In order to apply the PI control method to compute a state feedback controller, one must measure the state throughout the quantum evolution. However, measurement cannot be done on a quantum system without changing the quantum state. Therefore, special care must be taken. One can develop a so-called hybrid dynamics that describes the joint evolution of both the quantum state and the measurement outcome. Within this framework one can indirectly monitor the quantum state from the measurement outcomes. In simulation the applicability of this idea to control a circuit of n qubits is demonstrated to reach an arbitrary final state at minimal cost. In addition to quantum state preparation, the invention may also have application to control of qubits in quantum hardware.

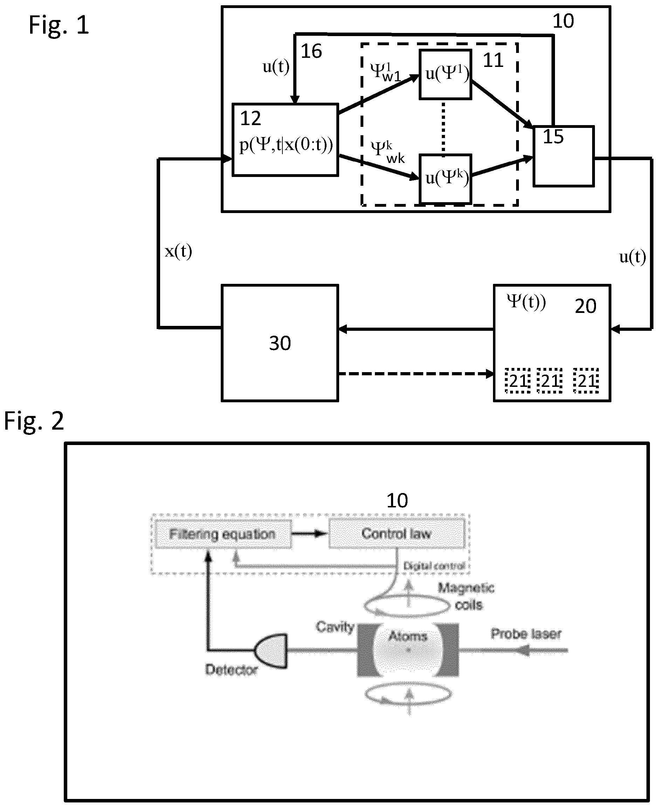

The present invention relates in a first aspect to a device for quantum computing (1), in particular a control architecture, for control of an open quantum system (QPIC) for providing, that is computing an accurate approximation of, a ground quantum state from an initial quantum state of a quantum system, comprising a digital controller (10), an analog quantum device (20), and a detector (30), wherein the detector (30) is configured to perform at least one measurement x(t) on the analog quantum device at a point in time t and to provide said at least one measurement to the digital controller (10), the analog quantum device (20) is configured to receive input u(t) from the digital controller (10), and wherein the analog quantum device is configured for quantum computing, the digital controller (10) comprises a filter (12), a stochastic controller (11), and an adder (15), wherein the filter is configured to receive input x(t) from the detector and is configured to estimate a distribution over current quantum states Ψ (t) at time t based on the past measurement outcomes x(0:t) and the past controls u(0:t-dt) in the form of a probability distribution p(Ψ,t|x(0:t), wherein said probability distribution is represented by a number of weighted samples (Ψ¹, wₗ) to (Ψ^{k}, wₖ) with weights wₗ to wₖ, wherein k is the number of samples, and wherein the stochastic controller is configured to receive the number of weighted samples (Ψ¹, wₗ) to (Ψ^{k}, wₖ) and to compute an optimal control u(Ψⁱ, wᵢ) for each weighted sample, wherein the adder is configured to sum the optimal controls and to provide output to the analog quantum device and to the filter (see e.g. fig. 1). Fig. 1 shows a functional diagram. It consists of a quantum device, a detector and a digital controller. The quantum device can be any analog quantum computing system e.g. consisting of (any type of) qubits. The quantum elements change dynamically in time according to the laws of quantum physics, typically under dynamic Hamiltonian H, time-dependent disturbances from the environment, and time dependent input provided by the controller u(t). The state of the quantum system at time t is denoted as Ψ (t). The detector can be any type of detector that measures partial and noisy information of the quantum state denoted as x(t). The digital controller consists of two parts: a filter and a control law. The filter estimates the current quantum state Ψ (t) based on the past measurement outcomes x(0:t) and the past controls u(0:t-dt). Since the quantum state cannot be known exactly, this estimate takes the form of a probability distribution p(Ψ,t|x(0:t)). In practice this probability distribution cannot be represented exactly and is represented by a number of weighted samples Ψ¹,... Ψ^{k} with weights wₗ,... wₖ (e.g. using sample filtering). The control law computes the optimal control u(Ψⁱ) for each sample. The output of the digital controller u(t) = Σᵢ wᵢ u(Ψⁱ) is the weighted sum of these controls and depends in principle on the entire measurement history x(0:t). As an approximation one may consider the special case that u(t) does not depend on x(0:t), called an open loop controller. Otherwise, it is called a feedback controller. Fig. 1 shows details of the digital controller featuring both the filter (12) and the stochastic controller (11). Both filter and stochastic controller use a physical model of the quantum device. The physical model is detailed e.g. in Fig. 1 and specifies the stochastic dynamics of the quantum device in terms of dynamic Hamiltonian H, including the time dependent external control input u(t), time-dependent disturbances from the environment C, dxi(t). The physical model also specifies the stochastic relation between the quantum state Ψ (t) and the measurement outcome x(t) (f_{q} and dW(t)). The physical model provides a complete description how an initial state of the quantum system Ψ(0) at time t=0 evolves to a final state Ψ^{f} at time t=T. The stochastic controller consists of the physical model, the initial intermediate quantum state Ψ(t) at time t and the control objective. The control objective is a function J of the quantum state trajectory Ψ (t:T) and the control trajectory u(t:T). The control objective is to prepare a final state that is close to the ground state of a target quantum Hamiltonian from the initial intermediate quantum state Ψⁱ (t), while minimizing computation costs. The physical model, the initial state, and the control objective define a stochastic optimal control problem, which is to find the feedback control function u(t:T, Ψⁱ (t:T)) or open loop control function u(t:T) that minimizes the control objective J. The stochastic optimal control problem is solved using path integral control methods. The solution provides the control solution u(t, Ψⁱ (t)). The path integral control computation involves sampling trajectories using a state and time dependent sampling control function {û}. The sampling procedure can be optimized by using better sampling controllers to give more accurate control law solutions (iterative importance sampling, publication available). The iterative importance sampling can be initialized with any sampling controller, for instance {û}=0 or {û}provided by the solution of the deterministic control problem. The control solution u(t, Ψⁱ (t)) is computed for all samples Ψ^{l} (t)...Ψ^{k}(t) and added by the adder (15) to yield the control u(t) at time t.

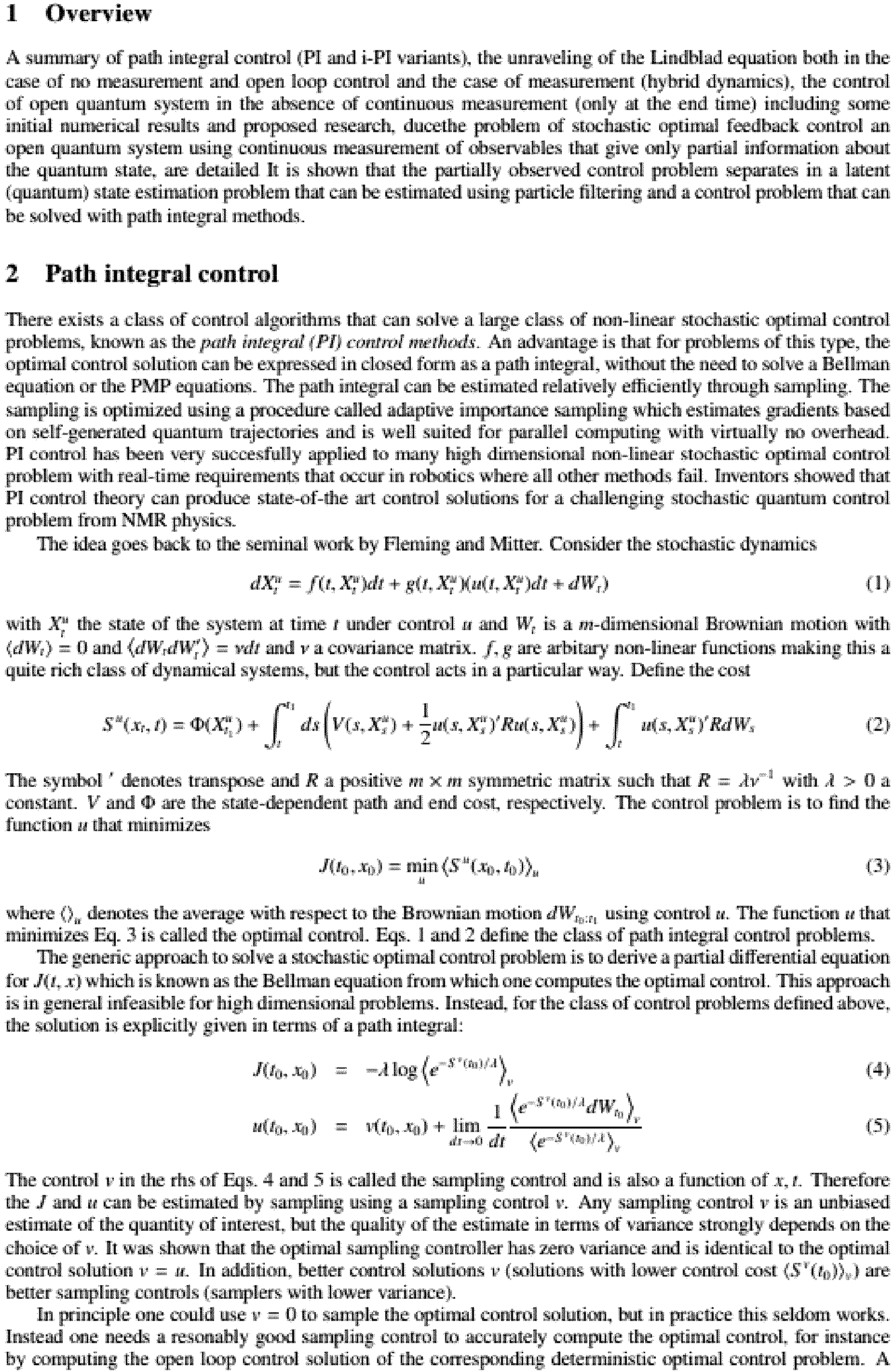

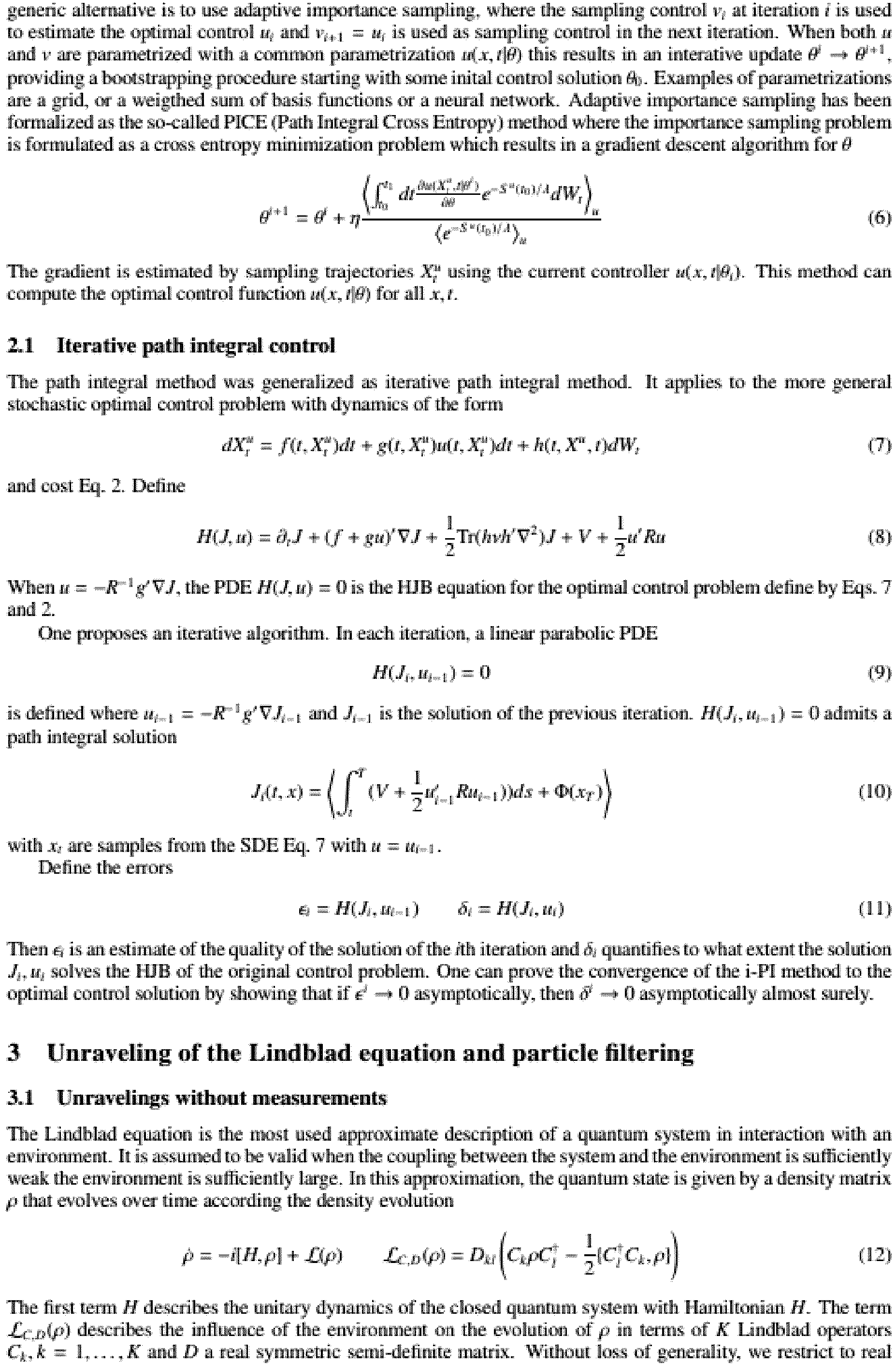

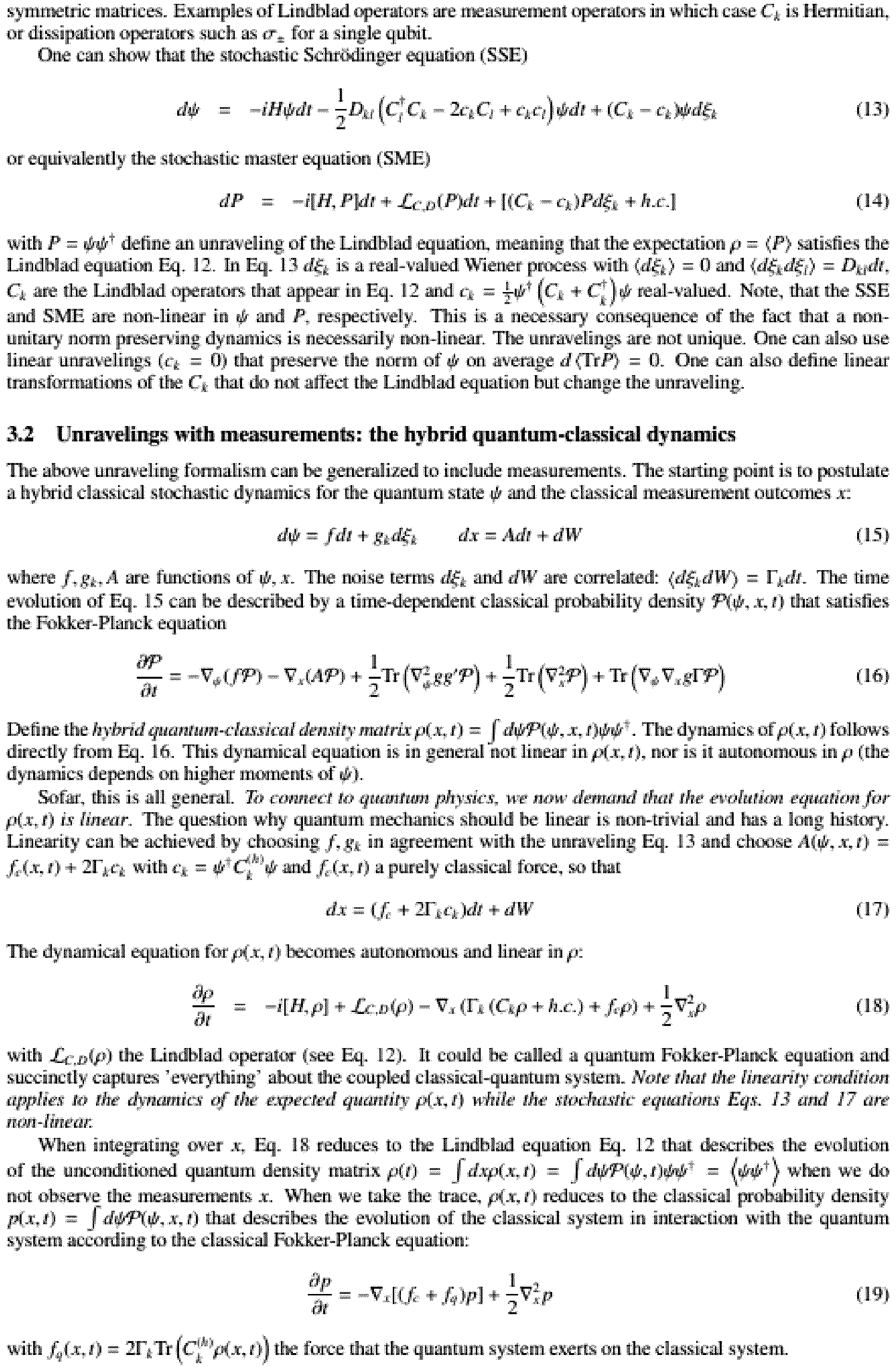

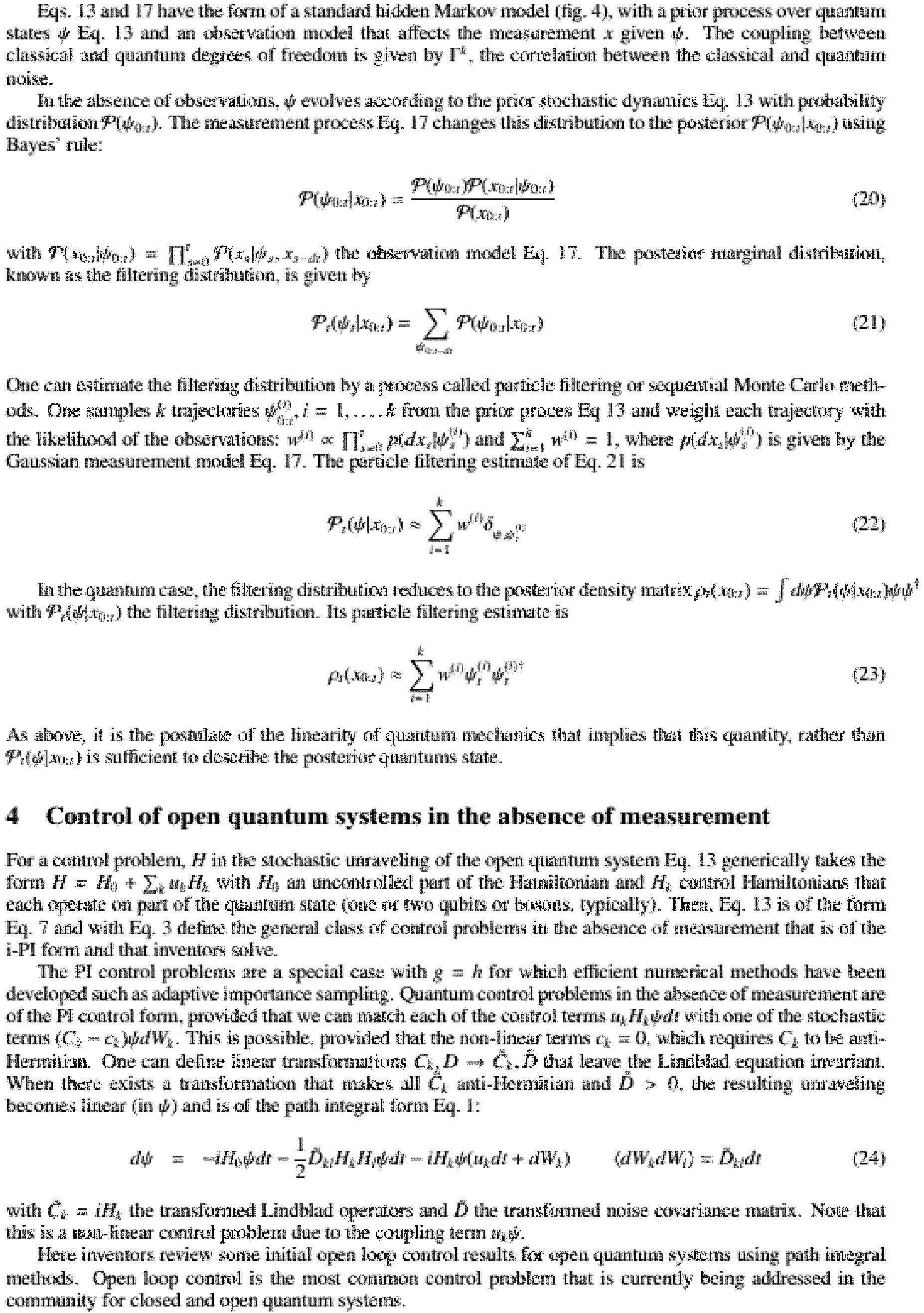

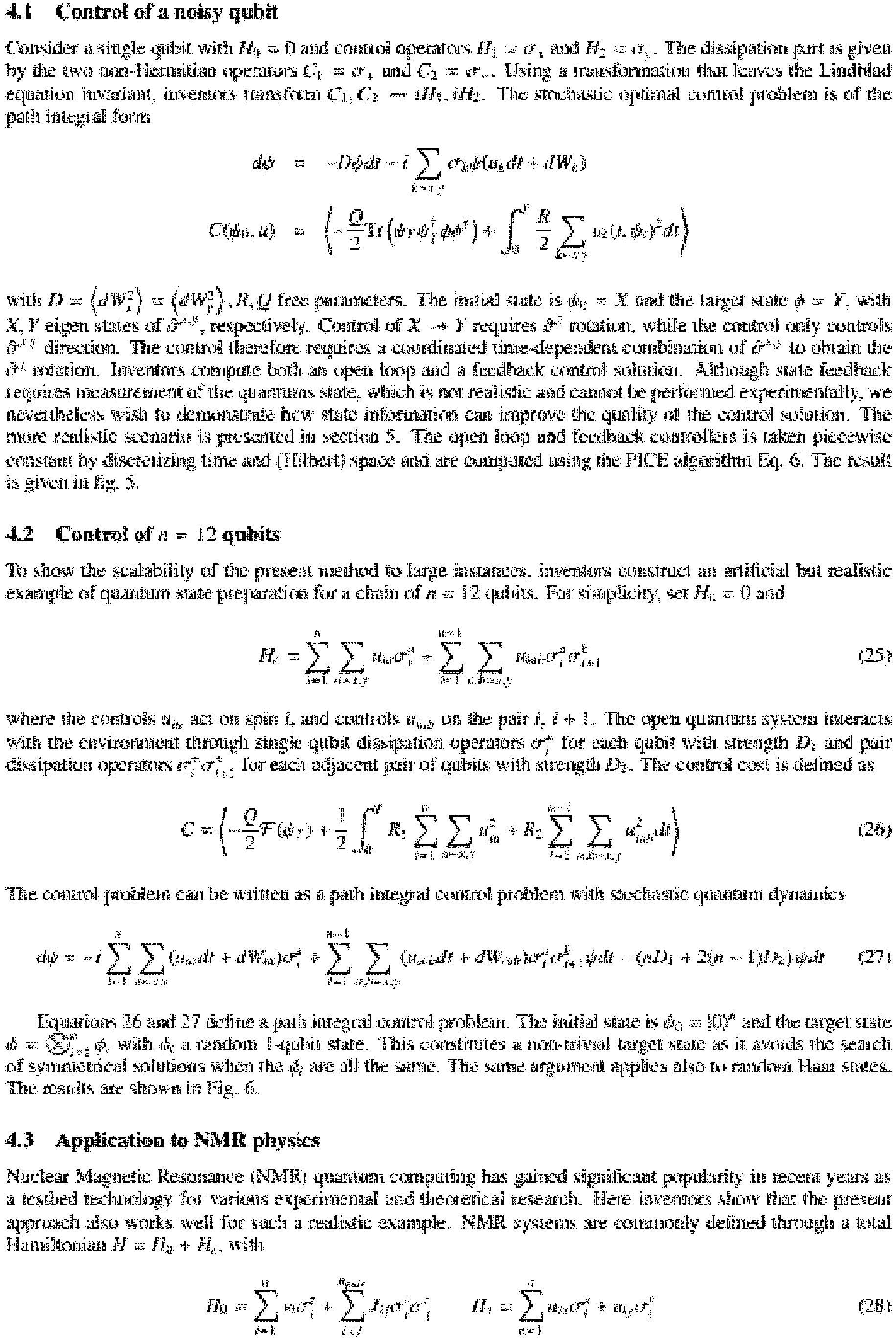

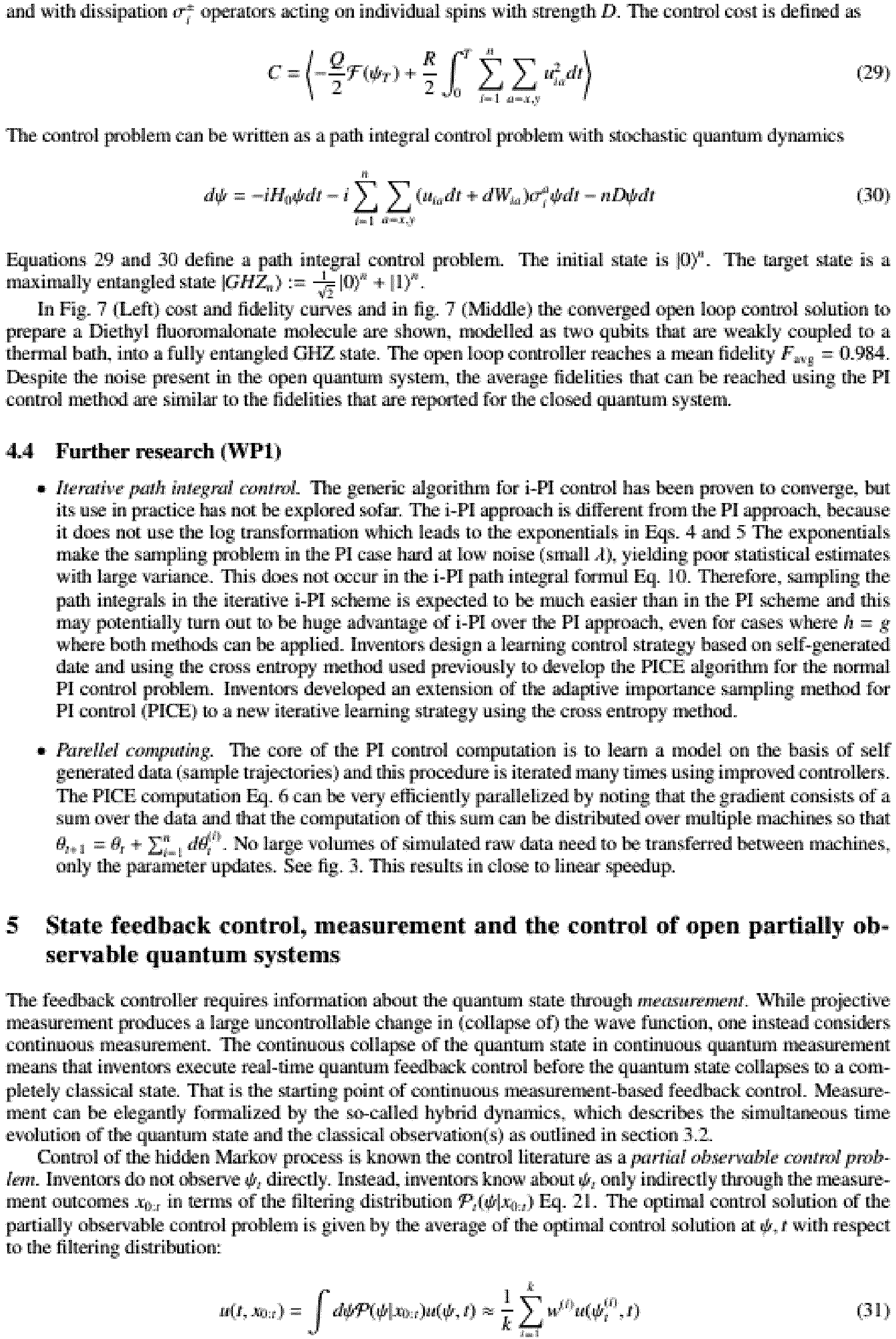

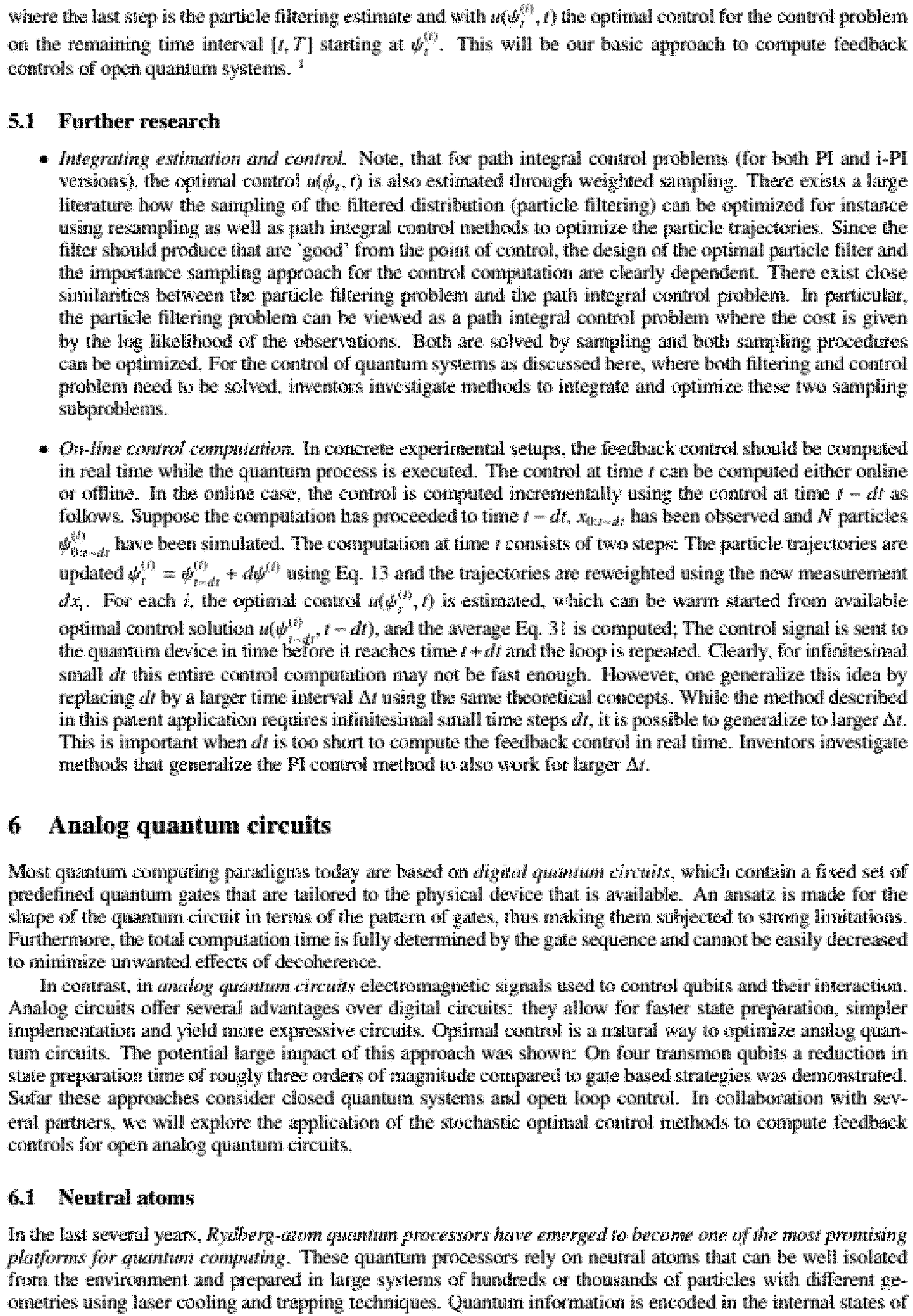

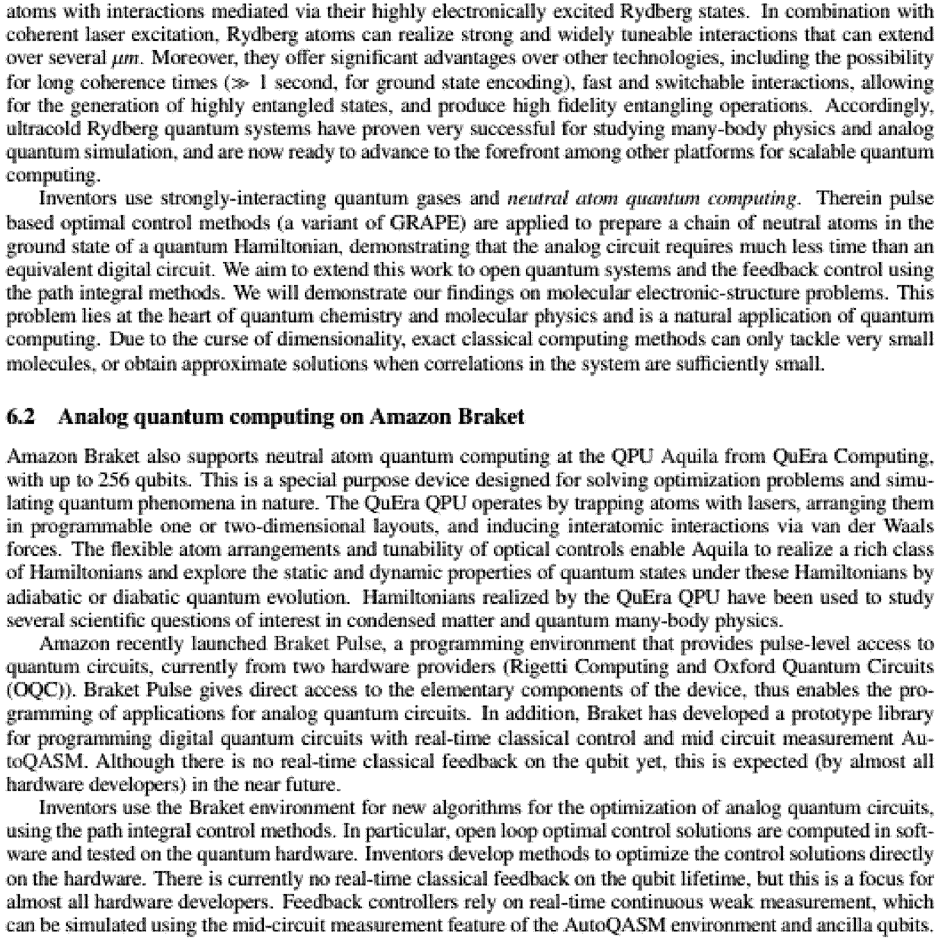

The separation of the partially observable problem into an estimation problem and an observable control problem assumes that the minimum of the expected control cost is equal to the expectation of the minimal cost. This is true when the minimization is with respect to all state and time dependent functions. It is not true when the minimization is restricted to, for instance, open loop controls.

In a second aspect the present invention relates to a method of operating a device according to the invention , comprising (1) providing an initial state of the analog quantum device (20), and a detector (30), (2) providing a physical model of the initial state of quantum device (20), (3) providing a digital controller (10) which comprises a filter (12), a stochastic controller (11), and an adder (15), wherein the stochastic controller (11) formulates a control problem, the control problem comprising a control objective in view of the initial state and desired final state of the analog quantum device, and (4) configuring the filter to receive input x(t) from the detector, (5) configuring the filter to estimate a distribution Ψ (t) over current quantum states at time t based on the past measurement outcomes x(0:t) and the past controls u(0:t-dt) in the form of a probability distribution p(Ψ,t|x(0:t)), wherein said probability distribution is represented by a number of weighted samples (Ψ¹, wₗ) to (Ψ^{k}, wₖ) with weights w₁ to wₖ, wherein k is the number of samples, (6) configuring the stochastic controller to receive the number of weighted samples (Ψ¹, w₁) to (Ψ^{k}, wₖ), (7) computing an optimal control u(Ψⁱ, wᵢ) for each weighted sample using a path integral control method, (8) configuring the adder to sum the optimal controls, (9) providing output u(t) from the adder to the analog quantum device and to the filter, and (10) evolving the analog quantum device into it's ground state. In particular, the present method can be applied to the molecular electronic-structure problem. The molecular electronic-structure problem, which lies at the heart of quantum chemistry and molecular physics, is considered to be a vital source of scientific breakthroughs, and a natural application of quantum computing. It may be considered to be a problem of accurately predicting the electronic structure of atoms and molecules. On paper, these structures are fully determined by the Schrödinger equation. Affected with the curse of dimensionality, current classical computing power is only capable of resolving the electronic-structure problem for very small molecules. This obstruction has led to the design and development of numerous computationally tractable approximate models, most notably correlated wave-function methods and Density Functional Theory. Despite the successes of these methods, they fail, for instance, to accurately describe the electronic structure of strongly correlated systems. Various approaches have been proposed to overcome such limitations in the confines of classical computing, but none have been satisfying and the search continues.

In a third aspect the present invention relates to a computer program comprising instructions, the instructions when loaded and running on a computer causing the computer to carry out: providing the device for quantum computing according to the invention, providing a controller (11), bringing the analog quantum device into an initial state, providing quantum instruction to the analog quantum device in its initial state, and evolving the quantum device into it's ground state.

In a fourth aspect the present invention relates to a digital controller (10) for operating a device for quantum computing comprising a filter (12), a stochastic controller (11), and an adder (15), wherein the filter is configured to receive input x(t) from the detector and is configured to estimate a distribution Ψ (t) over current quantum states of the analog quantum device at time t based on the past measurement outcomes x(0:t) and the past controls u(0:t-dt) in the form of a probability distribution p(Ψ,t|x(0:t)), wherein said probability distribution is represented by a number of weighted samples (Ψ¹, w₁) to (Ψ^{k}, wₖ) with weights w₁ to wₖ, wherein k is the number of samples, and wherein the stochastic controller is configured to receive the number of weighted samples (Ψ¹, w₁) to (Ψ^{k}, wₖ) and to compute an optimal control u(Ψⁱ, wᵢ) for each weighted sample, wherein the adder is configured to sum the optimal controls and to provide output to the analog quantum device and to the filter.

Thereby the present invention provides a solution to one or more of the above-mentioned problems.

Advantages of the present invention are detailed throughout the description.

### DETAILED DESCRIPTION OF THE INVENTION

The present invention relates in a first aspect to a device according to claim 1.

In an exemplary embodiment of the present device for quantum computing the analog quantum device is configured to change dynamically in time according to the laws of quantum physics under dynamic Hamiltonian H, time-dependent disturbances from the environment, and time dependent input provided by the controller u(t). The analog quantum device is therefore configured for continuous time calculation of the quantum device.

In an exemplary embodiment of the present device for quantum computing the detector is configured to measure partial and noisy information of the quantum state of the analog quantum device denoted as x(t), in particular wherein the detector comprises a probe laser for providing an input signal, an electromagnetic arrangement, such as magnetic coils, for measuring a change in quantum state, and a detector for measuring a change in quantum state.

In an exemplary embodiment of the present device for quantum computing the stochastic controller (11) is configured to approximate u(t) as not to depend on x(0:t) and therefore the digital controller is configured as an open loop controller, or wherein the digital controller is configured to approximate u(t) as to depend on x(0:t) and therefore the digital controller is configured as a feedback controller.

In an exemplary embodiment of the present device for quantum computing the stochastic controller (11) and/or the filter (12) are configured for using a physical model of the analog quantum device, in particular wherein the physical model provides a description how an initial state of the analog quantum device Ψi at time t=0 evolves to a final state Ψ_f at time t=T using optimal control sequence u(0:T).

In an exemplary embodiment of the present device for quantum computing the stochastic controller (11) is configured for applying a control objective on the control trajectory Ψ (0:T) of the analog quantum device including the initial and final state and the control trajectory u(0:T), and wherein the control objective is to prepare a final state of the analog quantum device, that is close to the ground state of a target quantum Hamiltonian, while minimizing computation costs.

In an exemplary embodiment of the present device for quantum computing the stochastic controller (11) is configured to define a stochastic optimal control problem, which stochastic optimal control problem is to provide a control sequence u(0:T) that minimizes the control objective J, in particular in terms of computation costs and ground state provided, wherein the stochastic optimal control problem is solved using a path integral control method, and wherein the solution of the stochastic optimal control problem provides the control law u('P,w). It is noted that 0:T in u(0:T) means the continuous sequence of times 0:T that is approximated using a fine time discretisation step dt from t=0 to t=T.

In an exemplary embodiment of the present device
the path integral control method is configured to reiterate such that during a subsequent iteration the control law is improved, and/or in particular wherein the path integral control method is configured for parallelised computing wherein each iteration generates trajectories with control u(Θₚ) and based on the trajectories computes changes in parameters *dΘₚ* with the path integral control method, wherein parallel computed *dΘₚ* are added to *Θₚ₊₁,* and are used for a next iteration at p+1 as input to generate trajectories.

In an exemplary embodiment of the present device for quantum computing the digital controller is configured to be implemented on a digital (classical) processor or computer.

In an exemplary embodiment of the present device for quantum computing the analog quantum device comprises quantum elements.

In an exemplary embodiment of the present device for quantum computing quantum elements are selected from qubits, bosonic states, and neutral atoms.

In an exemplary embodiment of the present device for quantum computing the analog quantum device comprises m quantum elements, such as 2-10⁶ elements, and/or wherein the controller (11) is configured for control of a plurality of quantum elements.

In an exemplary embodiment of the present method (2) providing the initial state of the analog quantum device is selected from producing the initial state of the analog quantum device, and providing a model of the initial state of the analog quantum device.

In an exemplary embodiment the present method comprises configuring the stochastic controller (11) for performing a sequence of quantum operations from an initial quantum state of the analog quantum device to a ground quantum state of the analog quantum device using a minimal cost function, wherein the cost-function qualifies the ground quantum state and includes costs of computation.

In an exemplary embodiment the present method comprises measuring the quantum state of the analog quantum system during the quantum operations by the detector (30), and providing feedback to the digital controller (10), in particular to the filter (12).

In an exemplary embodiment the present method comprises configuring the controller (11) to provide hybrid dynamics for determining joint evolution of both the quantum state of the open analog quantum device and of a measurement outcome.

In an exemplary embodiment the present method comprises configuring the controller (11) for modelling an interaction of the analog quantum device and of the sequence of quantum operations with an environment, in particular an evolution of the quantum density matrix, such as using a Lindblad method.

In an exemplary embodiment of the present method the hybrid dynamics is such that an average behavior thereof coincides with the interaction of the analog quantum device and of the sequence of quantum interactions with an environment.

In an exemplary embodiment of the present method analog quantum device is an open quantum device, wherein the initial state of the analog quantum device is representative of a formalistic scientific problem, and wherein the ground state of the analog quantum device is representative of a solution to said formalistic problem, in particular wherein the problem is selected from a chemical problem, from a device, such as a chemical device.

The invention is further detailed by the accompanying figures and examples, which are exemplary and explanatory of nature and are not limiting the scope of the invention. To the person skilled in the art, it may be clear that many variants, being obvious or not, may be conceivable falling within the scope of protection, defined by the present claims.

### SUMMARY OF THE FIGURES

Figures 1-7 show details of the invention.

### DETAILED DESCRIPTION OF THE FIGURES

In the figures:
- 10: Digital controller
- 11: Stochastic controller
- 12: filter
- 15: adder
- 16: feedback path
- 20: analog quantum device
- 21: Quantum element, e.g. QUBIT
- 30: detector

Figure 1 shows a functional diagram as detailed above.

Figure 2 shows a prior art quantum optics illustration of measurement feedback control through continuous measurement as an instance of a partial observable control problem.

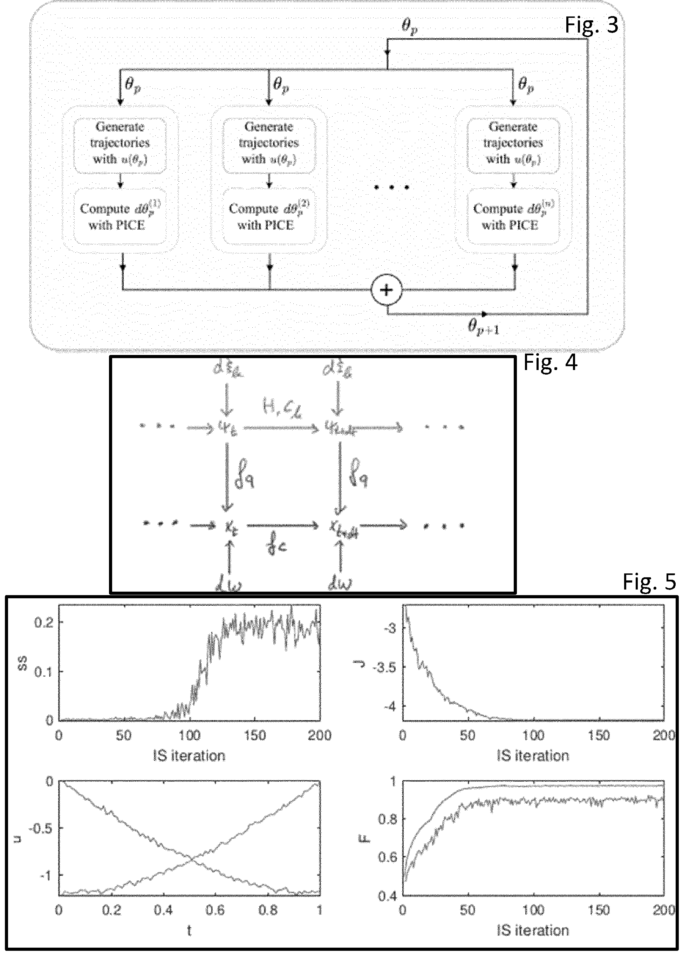

Figure 3: PICE uses importance sampling iterations (labelled by p). During each iteration, samples are generated using control functions u(Ψ,t|Θₚ). These samples are used to compute new parameters Θₚ₊₁. These two steps can be distributed on many machines with minimal communication overhead, since no large volumes of simulated
raw data need to be transferred between machines, only the parameter updates.

Figure 4: Hidden Markov model that represents the prior quantum process Eq. 13 (blue) and the classical process Eq. 17 (red). The coupling between these is proportional to Γₖ = 〈dξₖ dW), the correlation between the classical and quantum noise. Given observations x_{0:t}, the latent quantum states are updated using Bayes' rule, which can be estimated using particle filtering.

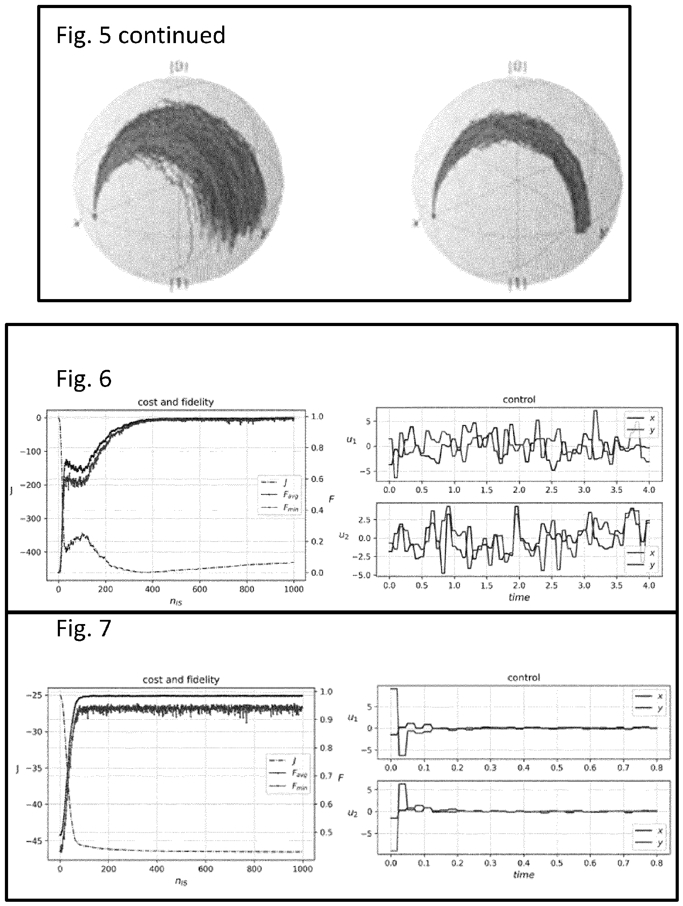

Figure 5: Controlled quantum trajectories for the noisy qubit. X: Initial state. Y: target state. D = 0:01, R = 1, Q = 10, number of trajectories nₜᵣₐⱼ = 100, maximum number of importance sampling (IS) steps n_{ISmax} = 200 and time step dt = 0:01. (Left) Four plots show the evolution of the importance sampling of the path integral control method for the open loop case, with (top left) the effective sample size versus importance sampling iteration showing the bootstrapping from an initial control u = 0 to the optimal control solution after 200 IS iterations (bottom left). (Top right) Optimal control cost versus IS iterations. (Bottom right) Mean fidelity (blue) and worse case fidelity (red) on ntraj samples versus IS iterations. Quantum trajectories on the Bloch sphere using optimal open loop control (Middle) and state feedback control (Right).

Figure 6: Control of an = 12 qubit 1-D spin chain. The parameters are K = 50, T = 4, L = 100, R=0.1, D = 0:001, Q=1000, n_{ISmax}=1000, and nₜᵣₐⱼ=400. Average fidelity reached F _{∞} = 0:990 +/- 0:001. We show only 2 controls, the rest are similar. Runtime 11:5hr.
Figure 7: Open loop control of a small open NMR quantum system, consisting of a Diethyl fluoromalonate molecule, modelled as two qubits that are weakly coupled to a thermal bath. (Left) Cost (J), mean fidelity (F_{avg}) and worse case fidelity (Fₘᵢₙ) vs IS steps and (Right) Time dependent (open loop) optimal control solution uᵢₓ(t); u_{iy}(t)

The figures are further detailed in the description and examples below.

### EXAMPLES/EXPERIMENTS

The above relates to examples of the present invention.
- 10: Digital controller
- 11: Stochastic controller
- 12: filter
- 15: adder
- 16: feedback path
- 20: analog quantum device
- 21: Quantum element, e.g. QUBIT
- 30: detector

## Claims

1. Device for quantum computing (1), in particular a control architecture, for control of an open quantum system (QPIC) for providing a ground quantum state from an initial quantum state of a quantum system, comprising
a digital controller (10), an analog quantum device (20), and a detector (30),
wherein
the detector (30) is configured to perform at least one measurement x(t) on the analog quantum device at a point in time t and to provide said at least one measurement to the digital controller (10),
the analog quantum device (20) is configured to receive input u(t) from the digital controller (10), and wherein the analog quantum device is configured for quantum computing,
the digital controller (10) comprises a filter (12), a stochastic controller (11), and an adder (15), wherein the filter is configured to receive input x(t) from the detector and is configured to estimate a distribution over current quantum states Ψ (t) at time t based on the past measurement outcomes x(0:t) and the past controls u(0:t-dt) in the form of a probability distribution p(Ψ,t|x(0:t)), wherein said probability distribution is represented by a number of weighted samples (Ψ¹, wₗ) to (Ψ^{k}, wₖ) with weights w₁ to wₖ, wherein k is the number of samples, and wherein the stochastic controller is configured to receive the number of weighted samples (Ψ¹, wₗ) to (Ψ^{k}, wₖ) and to compute an optimal control u(Ψⁱ, wᵢ) for each weighted sample, wherein the adder is configured to sum the optimal controls and to provide output to the analog quantum device and to the filter.

2. The Device for quantum computing according to claim 1, wherein the analog quantum device is configured to change dynamically in time according to the laws of quantum physics under dynamic Hamiltonian H, time-dependent disturbances from the environment, and time dependent input provided by the controller u(t).

3. The Device for quantum computing according to any of claims 1-2, wherein the detector is configured to measure partial and noisy information of the quantum state of the analog quantum device denoted as x(t), in particular wherein the detector comprises a probe laser for providing an input signal, an electromagnetic arrangement, such as magnetic coils, for measuring a change in quantum state, and a detector for measuring a change in quantum state.

4. The Device for quantum computing according to any of claims 1-3, wherein the stochastic controller (11) is configured to approximate u(t) as to depend on x(0:t) and therefore the digital controller is configured as an open loop controller, or wherein the digital controller is configured to approximate u(t) as to depend on x(0:t) and therefore the digital controller is configured as a feedback controller.

5. The Device for quantum computing according to any of claims 1-4, wherein the stochastic controller (11) and/or the filter (12) are configured for using a physical model of the analog quantum device, in particular wherein the physical model provides a description how an initial state of the analog quantum device Ψi at time t=0 evolves to a final state Ψf at time t=T using optimal control sequence u(0:t).

6. The Device for quantum computing according to any of claims 1-5, wherein the stochastic controller (11) is configured for applying a control objective on the control trajectory Ψ (0:T) of the analog quantum device including the initial and final state and the control trajectory u(0:T-1), and wherein the control objective is to prepare a final state of the analog quantum device.

7. The Device for quantum computing according to any of claims 1-6, wherein the stochastic controller (11) is configured to define a stochastic optimal control problem, which stochastic optimal control problem is to provide a control sequence u(0:T-1) that minimizes the control objective J, wherein the stochastic optimal control problem is solved using a path integral control method, and wherein the solution of the stochastic optimal control problem provides the control law u('P,w), in particular wherein the path integral control method is configured to reiterate such that during a subsequent iteration the control law is improved, and/or in particular wherein the path integral control method is configured for parallelised computing wherein each iteration generates trajectories with control u(Θₚ) and based on the trajectories computes changes in parameters *dΘₚ* with the path integral control method, wherein parallel computed *dΘₚ* are added to *Θₚ₊₁,* and are used for a next iteration at p+1 as input to generate trajectories.

8. The Device for quantum computing according to any of claims 1-7, wherein the digital controller is configured to be implemented on a digital (classical) processor or computer, and/or Wherein the analog quantum device comprises quantum elements, and/or wherein quantum elements are selected from qubits, bosonic states, and neutral atoms, and/or Wherein the analog quantum device comprises m quantum elements, such as 2-10⁶ elements, and/or wherein the controller (11) is configured for control of a plurality of quantum elements.

9. A method of operating a device according to any of claims 1-8 , comprising
(1) providing an initial state of the analog quantum device (20), and a detector (30),
(2) providing a physical model of the initial state of quantum device (20),
(3) providing a digital controller (10) which comprises a filter (12), a stochastic controller (11), and an adder (15), wherein the stochastic controller (11) formulates a control problem, the control problem comprising a control objective in view of the initial state of the analog quantum device, and
(4) configuring the filter to receive input x(t) from the detector,
(5) configuring the filter to estimate a distribution Ψ (t) over current quantum states at time t based on the past measurement outcomes x(0:t) and the past controls u(0:t-dt) in the form of a probability distribution p(Ψ,t|x(0:t)), wherein said probability distribution is represented by a number of weighted samples (Ψ¹, w₁) to (Ψ^{k}, wₖ) with weights w₁ to wₖ, wherein k is the number of samples,
(6) configuring the stochastic controller to receive the number of weighted samples (Ψ¹, wₗ) to (Ψ^{k}, wₖ),
(7) computing an optimal control u(Ψⁱ, wᵢ) for each weighted sample using a path integral control method,
(8) configuring the adder to sum the optimal controls,
(9) providing output from the adder to the analog quantum device and to the filter, and
(10) evolving the analog quantum device into its ground state.

10. The method according to claim 9, wherein (2) providing the initial state of the analog quantum device is selected from producing the initial state of the analog quantum device, and providing a model of the initial state of the analog quantum device.

11. The method according to claim 9 or 10, comprising
configuring the stochastic controller (11) for performing a sequence of quantum operations from an initial quantum state of the analog quantum device to a ground quantum state of the analog quantum device minimizing a cost function, wherein the cost-function qualifies the ground quantum state and includes costs of computation, and/or
comprising measuring the quantum state of the analog quantum system during the quantum operations by the detector (30), and
providing feedback to the digital controller (10), in particular to the filter (12).

12. The method according to any of claims 9-11, comprising
configuring the stochastic controller (11) to provide hybrid dynamics for determining joint evolution of both the quantum state of the open analog quantum device and of a measurement outcome, and/or
configuring the stochastic controller (11) for modelling an interaction of the analog quantum device and of the sequence of quantum operations with an environment, in particular an evolution of the quantum density operator, in particular
wherein the hybrid dynamics is such that an average behavior thereof coincides with the interaction of the analog quantum device and of the sequence of quantum interactions with an environment.

13. The method according to any of claims 9-12, wherein the analog quantum device is an open quantum device, wherein the initial state of the analog quantum device is representative of a formalistic scientific problem, and wherein the ground state of the analog quantum device is representative of a solution to said formalistic problem, in particular wherein the problem is selected from a chemical problem, from a device, such as a chemical device.

14. A computer program comprising instructions, the instructions when loaded and running on a computer causing the computer to carry out:
bringing the analog quantum device of the device for quantum computing according to any of claims 1-8 into an initial state,
providing quantum instruction to the analog quantum device in its initial state, and
evolving the quantum device into its ground state.

15. A digital controller (10) for operating a device for quantum computing comprising a filter (12), a stochastic controller (11), and an adder (15), wherein the filter is configured to receive input x(t) from the detector and is configured to estimate a distribution Ψ (t) over current quantum states of the analog quantum device at time t based on the past measurement outcomes x(0:t) and the past controls u(0:t-dt) in the form of a probability distribution p(Ψ,t|x(0:t)), wherein said probability distribution is represented by a number of weighted samples (Ψ¹, w₁) to (Ψ^{k}, wₖ) with weights w₁ to wₖ, wherein k is the number of samples, and wherein the stochastic controller is configured to receive the number of weighted samples (Ψ¹, w₁) to (Ψ^{k}, wₖ) and to compute an optimal control u(Ψⁱ, wᵢ) for each weighted sample, wherein the adder is configured to sum the optimal controls and to provide output to the analog quantum device and to the filter.
